# EUROPEAN PATENT APPLICATION

(11) **EP 4 535 467 A1**
(43) Date of publication of application: **09.04.2025**
(21) Application number: 24203758.8
(22) Date of filing: 30.09.2024
(51) Int. Cl.: H01M 4/62, H01M 10/052, H01M 4/134, H01M 10/0525, H01M 4/38, C08F 220/06, C08F 220/44, H01M 4/02

(54) **BINDER FOR NEGATIVE ELECTRODE OF RECHARGEABLE LITHIUM BATTERY, NEGATIVE ELECTRODE OF RECHARGEABLE LITHIUM BATTERY INCLUDING THE SAME, AND RECHARGEABLE LITHIUM BATTERY INCLUDING THE SAME**

(30) Priority: 06.10.2023 KR 20230133090
(71) Applicant: SAMSUNG SDI CO., LTD., Giheung-gu Yongin-si, Gyeonggi-do 17084 (KR)
(72) Inventor: JUNG, Kyung Hwa, Suwon-si, 16678 (KR); LEE, Kuk Joo, Suwon-si, 16678 (KR); CHO, Yun Shik, Suwon-si, 16678 (KR); LEE, Jung Min, Suwon-si, 16678 (KR); CHO, Min Ho, Suwon-si, 16678 (KR); CHOI, Je Won, Suwon-si, 16678 (KR); PARK, Su Jin, Suwon-si, 16678 (KR)
(74) Representative: Marks & Clerk LLP

(57) **Abstract**

A negative electrode binder for rechargeable lithium batteries and a rechargeable lithium battery including the same are disclosed. The binder for a negative electrode includes: a unit derived from a first monomer; and a unit derived from a (meth)acrylic monomer as a second monomer. The first monomer includes at least one of a (meth)allyl ether monomer or a (meth)acryl ester monomer, and each of the (meth)allyl ether monomer and the (meth)acryl ester monomer contains an alkyl group having a carbon number of 3 or more and an anionic functional group.

## Description

### BACKGROUND

### 1. Field

The present disclosure relates to a binder for a negative electrode of rechargeable lithium batteries, a negative electrode for rechargeable lithium batteries including the same, and a rechargeable lithium battery including the same.

### 2. Description of the Related Art

In recent years, demand for high energy density and high capacity secondary batteries has grown rapidly with the rapid spread of electronic devices using batteries, such as mobile phones, notebook computers, and electric vehicles. In particular, rechargeable lithium batteries have attracted attention as a power source for mobile devices due to light weight and high energy density thereof.

A rechargeable lithium battery includes a positive electrode and a negative electrode, each of which contains active materials allowing (e.g., capable of) intercalation and deintercalation of lithium ions, and an electrolyte, and produces electricity through oxidation and reduction reactions upon intercalation/deintercalation of the lithium ions at the positive electrode and the negative electrode.

A positive electrode material for rechargeable lithium batteries may include one or more transition metal compounds, such as lithium cobalt oxide, lithium nickel oxide, lithium manganese oxide, and/or the like. A negative electrode material may include one or more crystalline carbon materials, such as natural graphite, artificial graphite, and/or amorphous carbon materials.

As a part of (e.g., an important part of) the efforts to improve performance of such rechargeable lithium batteries, cells (battery cells) capable of being rapidly charged have been actively developed. In general, rapid charging reduces the cell capacity through reduction in lifespan of the cells. It is desirable to have negative electrodes with reliable (e.g., securing) low shrinkage, low expansion of silicon-based negative electrode active materials, no cracking, and low warpage.

### SUMMARY

An aspect according to some embodiments is directed toward a binder for a negative electrode of rechargeable lithium batteries that reduces shrinkage and expansion of a silicon-based negative electrode active material, prevents or reduces negative electrode embrittlement, and improves negative electrode energy density.

An aspect according to some embodiments is directed toward a binder for a negative electrode of rechargeable lithium batteries that does not generate cracks in a negative electrode containing a silicon-based negative electrode active material while reducing a warpage value thereof.

An aspect according to some embodiments is directed toward a rechargeable lithium battery including a negative electrode for rechargeable lithium batteries including the binder for a negative electrode.

Additional aspects will be set forth in part in the description which follows and, in part, will be apparent from the description, or may be learned by practice of the presented embodiments of the disclosure.

According to one or more embodiments of the present disclosure, a binder for a negative electrode of rechargeable lithium batteries includes: a unit derived from a first monomer; and a unit derived from a second monomer, the second monomer being a (meth)acrylic monomer, wherein the first monomer includes at least one of a (meth)allyl ether monomer or a (meth)acryl ester monomer, and each of the (meth)allyl ether monomer and the (meth)acryl ester monomer includes an alkyl group having a carbon number of 3 or more and an anionic functional group.

According to one or more embodiments of the present disclosure, a rechargeable lithium battery includes a negative electrode including the binder; a positive electrode; and an electrolyte.

At least some of the above and other aspects of the invention are set out in the claims.

Embodiments of the present disclosure provide a binder for a negative electrode of rechargeable lithium batteries that reduces shrinkage and expansion of a silicon-based negative electrode active material, prevents or reduces negative electrode embrittlement, and improves energy density.

Embodiments of the present disclosure provide a binder for a negative electrode of rechargeable lithium batteries that does not generate cracks in a negative electrode containing a silicon-based negative electrode active material while reducing a warpage value thereof.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings,
FIG. 1 is a diagram schematically showing a rechargeable lithium battery according to one or more embodiments of the present disclosure.
FIG. 2 is a schematic cross-sectional view of a prismatic battery according to one or more embodiments of the present disclosure.
FIG. 3 is a schematic illustration of a pouch-type battery according to one or more embodiments of the present disclosure.
FIG. 4 is a schematic illustration of a pouch-type battery according to one or more embodiments of the present disclosure.

### DETAILED DESCRIPTION

Hereinafter, example embodiments of the present disclosure will be described in more detail with reference to the accompanying drawings. However, it should be understood that the following embodiments are provided by way of illustration and the present disclosure is not limited thereto and is defined only by the appended claims and equivalents thereto.

The terminology used herein is for the purpose of describing embodiments of the present disclosure and is not intended to be limiting of the present disclosure. Throughout the specification, unless specified otherwise, each element may be singular or plural.

Herein, "combinations thereof" may refer to mixtures, stacks, composites, copolymers, alloys, blends, and reaction products of components.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the drawings, thicknesses of various elements, layers, regions and/or the like may be exaggerated for clarity of illustration and the same elements are denoted by like reference numerals throughout the specification. In addition, when an arbitrary element is referred to as being disposed (or located or positioned) "above" (or "below") or "on" (or "under") a component, it may refer to that the arbitrary element is placed in contact with the upper (or lower) surface of the component and may also refer to that another component may be interposed between the component and the arbitrary element disposed (or located or positioned) on (or under) the component.

Herein, the term "layer" refers to not only a feature formed on the entire surface but also a feature formed on a partial surface in a plan view.

Herein, the "average particle diameter" may be measured by any suitable method (e.g., known to those skilled in the art), for example, by a particle diameter analyzer, transmission electron micrographs, or scanning electron micrographs. Alternatively, the average particle diameter may be measured by counting the number of particles in each particle diameter range using a device employing a dynamic light-scattering method to analyze data, followed by calculating the average particle diameter based on the analyzed data. The average particle diameter may be measured from microscopic images or measured with a particle diameter analyzer and can be defined as the diameter of particles with a cumulative volume of 50 volume% in the particle diameter distribution (D₅₀).

Herein, the term "or" should not be construed as exclusive. For example, "A or B" should be construed to include A, B, A+B, and/or the like.

Herein, the term "(meth)acrylic" refers to acrylic and/or methacrylic.

Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Hereinafter, embodiments of the present disclosure will be described in more detail. However, it should be understood that the following embodiments are provided by way of illustration only and the present disclosure is defined only by the appended claims and equivalent thereto.

### Binder for negative electrode of rechargeable lithium batteries

A binder for a negative electrode of rechargeable lithium batteries according to some embodiments includes: a unit derived from a first monomer; and a unit derived from a (meth)acrylic monomer as a second monomer, wherein the first monomer includes at least one of a (meth)allyl ether monomer or a (meth)acryl ester monomer, and each of the (meth)allyl ether monomer and the (meth)acryl ester monomer contains an alkyl group having a carbon number of 3 or more and an anionic functional group.

In some embodiments, the binder for a negative electrode may be a copolymer of a monomer mixture including the (meth)acrylic monomer as the second monomer and at least one of the (meth)allyl ether monomer or the (meth)acrylic ester monomer as the first monomer.

Although a binder for a negative electrode prepared from the second monomer alone may be able to inhibit shrinkage and expansion of a silicon-based negative electrode active material, this binder for a negative electrode can make the negative electrode brittle. As a result, the binder for a negative electrode can cause cracking (e.g., severe cracking) of the negative electrode and can increase a warpage value of the negative electrode during a process of manufacturing the negative electrode. Cracking and the warpage value can be exacerbated in manufacture of negative electrodes having a large area. It is desirable for the negative electrodes to be crack-free and have a low warpage value in order to improve reliability of the negative electrodes and the rechargeable lithium batteries.

Each of the (meth)allyl ether monomer and the (meth)acrylic ester monomer may be applied to the binder for a negative electrode to provide a negative electrode active material layer that does not cause cracking of the negative electrode and has a low warpage value without impairing the effect of reducing shrinkage and expansion of the silicon-based negative electrode active material. That is, even when the (meth)allyl ether monomer and/or the (meth)acrylic ester monomer is included, there is no trade-off between the effect of reducing shrinkage and expansion of the negative electrode containing the silicon-based negative electrode active material and the effect of reducing cracking of the negative electrode and the warpage value.

In some embodiments, the first monomer and the second monomer may be present in a total amount of 99.5 wt% or more, for example, 99.5 wt% to 100 wt%, or 100 wt%, in the monomer mixture. Within these ranges, the effects of the binder for a negative electrode can be sufficiently achieved.

### First monomer

Each of the (meth)allyl ether monomer and the (meth)acrylic ester monomer contains an alkyl group having a carbon number of 3 or more and an anionic functional group. The alkyl group having a carbon number of 3 or more and an anionic functional group can prevent or reduce negative electrode embrittlement and reduce cracking of the negative electrode. Without being bound by theory, it is believed that the (meth)allyl ether monomer and the (meth)acrylic ester monomer can prevent or reduce negative electrode embrittlement while suppressing cracking of the negative electrode by providing repulsive forces between the binders.

In some embodiments, the anionic functional group refers to a functional group capable of exhibiting a negative charge in an aqueous solvent and may contain, for example, sulfur (S) or phosphorus (P). The anionic functional group may be a functional group of a monovalent anion or a polyvalent anion.

In some embodiments, the anionic functional group may be a sulfonic acid group (-SO₃H) or an anion (-SO₃⁻) of the sulfonic acid group, a phosphonic acid group (-PO(OH)₂) or an anion (-PO(OH)O⁻) or (-PO₃²⁻) of the phosphonic acid group, a phosphinic acid group (-P(O)H(OH)) or an anion (-P(O)HO⁻) of the phosphinic acid group, and/or the like. For example, the anionic functional group may be a sulfonic acid group or an anion of the sulfonic acid group.

Here, in "alkyl group having a carbon number of 3 or more", the carbon number refers to the number of carbon atoms constituting a main chain of an ester site or an ether site in the corresponding monomer. For example, the carbon number may range from 3 to 20.

In some embodiments, the (meth)allyl ether monomer having an anionic functional group and the (meth)acrylic ester monomer having an anionic functional group may be represented by Formula 1: 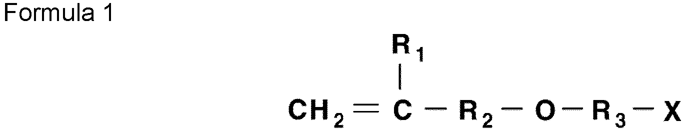
where R₁ is hydrogen or a methyl group;
R₂ is CH₂ or (C=O);
R₃ is a substituted or unsubstituted alkylene group having a carbon number of 3 or more, a substituted or unsubstituted aminoalkylene group having a carbon number of 3 or more or an ammonium cationic group thereof, or a substituted or unsubstituted alkylamino group having a carbon number of 3 or more or an ammonium cationic group thereof; and
X is an anionic functional group.

As used herein, "substituted or unsubstituted" refers to that at least one hydrogen atom of the corresponding functional group is substituted with a hydroxyl (OH) group or a C₁ to C₁₀ alkyl group.

In Formula 1, the "aminoalkylene group having a carbon number 3 or more" may be a functional group represented by Formula 2:

Formula 2 *- R₃₁ - N(R₃₂) - R₃₃ -*,

where * is a linking site of an element;
R₃₁ and R₃₃ are each independently a substituted or unsubstituted C₁ to C₁₀ alkylene group;
R₃₂ is hydrogen or a substituted or unsubstituted C₁ to C₁₀ alkyl group; and
the total number of carbons in the alkylene groups of R₃₁ and R₃₃ is 3 or more.

In Formula 1, the "alkylamino group having a carbon number 3 or more" may be a functional group represented by Formula 3:

Formula 3 *-N(R₃₄)-R₃₅-*,

where * is a linking site of an element;
R₃₄ is hydrogen or a substituted or unsubstituted C₁ to C₁₀ alkyl group; and
R₃₃ is a substituted or unsubstituted alkylene group having a carbon number 3 or more.

In some embodiments, R₃ in Formula 1 may be a substituted or unsubstituted alkylene group having a carbon number of 3 or more, for example, a substituted or unsubstituted alkylene group having a carbon number of 3 to 10.

In some embodiments, R₃ in Formula 1 may be a substituted or unsubstituted aminoalkylene group having a carbon number of 3 or more or an ammonium cationic group thereof, for example, a substituted or unsubstituted aminoalkylene group having a carbon number of 3 to 10 or an ammonium cationic group thereof.

In some embodiments, R₃ in Formula 1 may be a substituted or unsubstituted alkylamino group having a carbon number of 3 or more or an ammonium cationic group thereof, for example, a substituted or unsubstituted alkylamino group having a carbon number of 3 to 10 or an ammonium cationic group thereof.

In Formula 1, the "ammonium cationic group thereof' refers to a functional group in which hydrogen or a C₁ to C₁₀ alkyl group is linked to nitrogen of the corresponding amino group to represent a monovalent cation.

For example, the monomer (e.g., the first monomer) may include at least one compound selected from among compounds represented by Formula 1-1, Formula 1-2, and Formula 1-3:

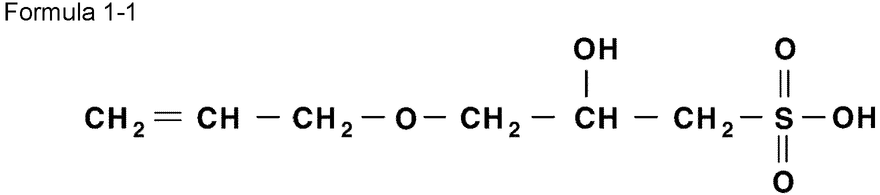

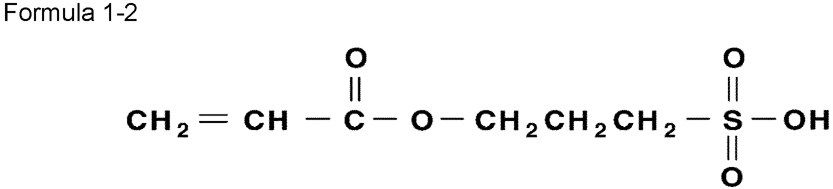

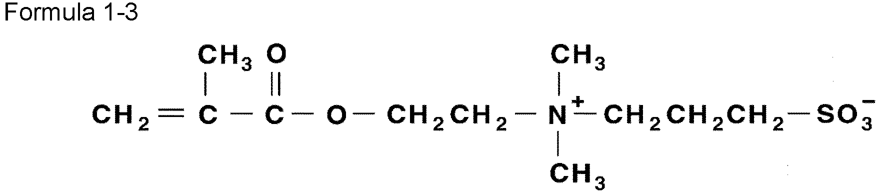

In some embodiments, at least one of the (meth)allyl ether monomer or the (meth)acrylic ester monomer may be present in an amount of 3 wt% to 15 wt% in the monomer mixture. In an embodiment, at least one of the (meth)allyl ether monomer or the (meth)acrylic ester monomer may be present in an amount of 5 wt% to 10 wt%. Within these ranges, the binder for a negative electrode can secure coating processability by reducing warpage of the negative electrode without impairing the effect of reducing shrinkage and expansion of the silicone-based active material of the binder for a negative electrode.

In some embodiments, the first monomer may be present in an amount of 3 wt% to 15 wt% in the monomer mixture. In an embodiment, the first monomer is present in an amount of 5 wt% to 10 wt%. Within these ranges, the binder for a negative electrode can secure coating processability by reducing warpage of the negative electrode without impairing the effect of reducing shrinkage and expansion of the silicone-based active material of the binder for a negative electrode.

In some embodiments, the binder for a negative electrode may further include a unit derived from a (meth)acrylamide monomer having an anionic functional group as the first monomer or in addition to the first monomer. That is, the first monomer may include a (meth)acrylamide monomer having an anionic functional group and at least one of the (meth)allyl ether monomer or the (meth)acryl ester monomer.

In some embodiments, the binder for a negative electrode may be a copolymer of a monomer mixture including at least one of the (meth)allyl ether monomer or the (meth)acrylic ester monomer as the first monomer; a (meth)acrylamide monomer having an anionic functional group; and a (meth)acrylic monomer as the second monomer.

The (meth)acrylamide monomer having an anionic functional group may be further included in the binder for a negative electrode to further reduce the expansion rate of a negative electrode active material layer or the negative electrode.

The anionic functional group (e.g., of the (meth)acrylamide monomer) may include an anionic functional group containing sulfur (S) or phosphorus (P). The anionic functional group may be a sulfonic acid group (-SO₃H) or an anion (-SO₃⁻) of the sulfonic acid group, a phosphonic acid group (-PO(OH)₂) or an anion (-PO(OH)O⁻) or (-PO₃²⁻) of the phosphonic acid group, a phosphinic acid group (-P(O)H(OH)) or an anion (-P(O)HO⁻) of the phosphinic acid group, and/or the like. For example, the anionic functional group may be a sulfonic acid group or an anion thereof.

In some embodiments, the monomer (e.g., (meth)acrylamide monomer having an anionic functional group) may be represented by Formula 4: 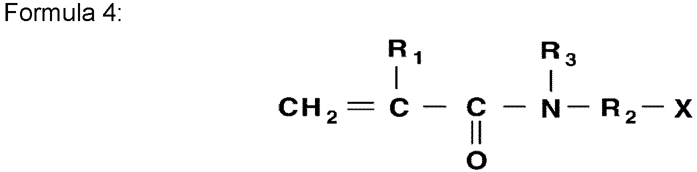
where R₁ is hydrogen or a methyl group;
R₂ is a substituted or unsubstituted alkylene group having a carbon number of 1 or more;
R₃ is hydrogen or a substituted or unsubstituted C₁ to C₁₀ alkyl group; and
X is an anionic functional group.

In some embodiments, R₂ may be a substituted or unsubstituted alkylene group having a carbon number of 3 or more, for example, a substituted or unsubstituted C₁ to C₁₀ alkylene group

For example, the monomer may include 2-(meth)acrylamido-2-methyl-1-propanesulfonic acid and/or the like.

The (meth)acrylamide monomer having an anionic functional group may be present in an amount of 1 wt% to 5 wt% in the monomer mixture. Within this range, the binder for a negative electrode can further reduce warpage of the negative electrode while suppressing cracking without impairing the effect of further reducing expansion of the negative electrode active material layer or negative electrode. For example, the monomer (e.g., (meth)acrylamide monomer having an anionic functional group) may be present in an amount of 1 wt% to 3 wt% in the monomer mixture.

In some embodiments, the monomer mixture may include 90 wt% to 95 wt% of a (meth)acrylic monomer as the second monomer; 1 wt% to 5 wt% of at least one of the (meth)allyl ether monomer having an anionic functional group or the (meth)acrylic ester monomer having an anionic functional group as the first monomer; and 1 wt% to 5 wt% of the (meth)acrylamide monomer having an anionic functional group.

### Second monomer

As the second monomer, the (meth)acrylic monomer has a (meth)acrylic group and can facilitate preparation of the binder for a negative electrode through polymerization with the monomer having an anionic functional group. The second monomer is different from the first monomer.

The (meth)acrylic monomer may include at least one of a (meth)acrylic monomer having a nitrile group or a (meth)acrylic monomer having a carboxylic acid group. For example, the (meth)acrylic monomer may include at least one of (meth)acrylonitrile or (meth)acrylic acid.

The (meth)acrylic monomer, that is, the second monomer, may be present in an amount of 85 wt% to 97 wt% in the monomer mixture. In an embodiment, the (meth)acrylic monomer is present in an amount of 90 wt% to 95 wt%. Within these ranges, the binder can reduce shrinkage and expansion of the silicone-based active material.

In some embodiments, the (meth)acrylic monomer having a nitrile group may be present in an amount of 30 wt% to 50 wt% in the monomer mixture. Within this range, the (meth)acrylic monomer can improve dispersibility of the negative electrode active material. For example, the (meth)acrylic monomer (e.g., the (meth)acrylic monomer having a nitrile group) may be present in an amount of 35 wt% to 45 wt%.

In some embodiments, the (meth)acrylic monomer having a carboxylic acid group may be present in an amount of 40 wt% to 65 wt% in the monomer mixture. Within this range, the negative electrode binder can reduce shrinkage and expansion of the silicone-based active material. For example, the (meth)acrylic monomer (e.g., the (meth)acrylic monomer having a carboxylic acid group) may be present in an amount of 50 wt% to 60 wt%.

The binder for a negative electrode may have a weight average molecular weight (MW) of 500,000 g/mol to 1,500,000 g/mol, for example, 800,000 g/mol to 1,000,000 g/mol. Within these ranges, the binder for a negative electrode can be incorporated into the negative electrode active material layer to realize the effects of the present disclosure described above. As used herein, "weight average molecular weight" may be obtained through gel permeation chromatography using a polystyrene standard.

The binder for a negative electrode may be an aqueous binder. Accordingly, the negative electrode binder may be suitably applied to a negative electrode for rechargeable lithium batteries. Because a positive electrode material may be vulnerable in an aqueous system, it may not be suitable to apply the negative electrode binder according to the embodiments of the present disclosure to a positive electrode.

The binder for a negative electrode according to some embodiments may be prepared by polymerizing the monomer mixture by any suitable method (e.g., known to those skilled in the art). Polymerization may be realized by emulsion polymerization, suspension polymerization, solution polymerization, and/or the like.

In the polymerization, an emulsifier may include one or more alkali salts of higher fatty acids, N-acryl amino acid salts, alkyl ether carbonates, acylated peptides, alkyl sulfonates, alkyl benzene sulfonates, alkyl amino acid salts, alkyl naphthalene sulfonates, sulfosuccinates, sulfonated oil, alkyl sulfates, alkyl ether sulfates, alkyl aryl ether sulfates, alkyl amide sulfates, alkyl phosphates, alkyl ether phosphates, alkyl aryl ether phosphates, or combinations thereof. For example, the emulsifier may be sodium dodecylbenzene sulfonate. The alkyl group may be an alkyl group having a carbon number of 1 to 20.

In the polymerization, an initiator may include ammonium persulfate, potassium persulfate, hydrogen peroxide, t-butyl hydroperoxide, or combinations thereof.

The emulsifier may be optionally present in an amount of 3 parts by weight or less, for example, 2 parts by weight or less, relative to 100 parts by weight of the monomer mixture. Within these ranges, the emulsifier can further improve adhesion and can secure good dispersion to provide a binder having a suitable size.

The initiator may be present in an amount of 0.1 parts by weight to 3 parts by weight, for example, 0.1 parts by weight to 2 parts by weight, relative to 100 parts by weight of the monomer mixture.

### Negative electrode for rechargeable lithium batteries

A negative electrode for rechargeable lithium batteries according to some embodiments includes the binder for a negative electrode.

The negative electrode for rechargeable lithium batteries according to the embodiments includes a current collector and a negative electrode material layer formed on the current collector. The negative electrode active material layer includes a negative electrode active material and the binder for a negative electrode, and may further include a conductive material. The negative electrode active material layer may further include a binder other than the binder for a negative electrode. For convenience, the binder for a negative electrode (according to embodiments of the present disclosure) will be referred to as a first binder and the binder other than the binder for a negative electrode will be referred to as a second binder.

For example, the negative electrode active material layer may include 90 wt% to 99 wt% of the negative electrode active material, 0.5 wt% to 5 wt% of the binder(s), and 0 wt% to 5 wt% of the conductive material.

### Negative electrode active material

The negative electrode active material includes a material allowing (capable of) reversible intercalation/deintercalation of lithium ions, lithium metal, a lithium metal alloy, a material capable of being doped to and de-doped therefrom by lithium, or a transition metal oxide.

The active material allowing reversible intercalation/deintercalation of lithium ions may include a carbon-based negative electrode active material, for example, crystalline carbon, amorphous carbon, or a combination thereof. The crystalline carbon may include, for example, graphite, such as natural graphite and/or artificial graphite, in amorphous (e.g., irregular/non-shaped), plate, flake, spherical, or fibrous form, and the amorphous carbon may include, for example, soft carbon, hard carbon, mesoporous pitch carbides, calcined coke, and/or the like.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al and Sn may be used.

The active material capable of being doped to and de-doped therefrom by lithium may be an Si-based negative electrode active material or an Sn-based negative electrode active material. The Si-based negative electrode active material may be silicon, a silicon-carbon composite, SiOₓ (0<x≤2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based negative electrode active material may be Sn, SnOₓ (0 < x ≤ 2, e.g., SnO₂), an Sn alloy, or a combination thereof.

The silicon-carbon composite may be a composite of silicon and amorphous carbon. According to some embodiments, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on (the surface of) the core.

The Si-based negative electrode active material or the Sn-based negative electrode active material may be used in combination with the carbon-based negative electrode active material.

In some embodiments, the negative electrode active material layer may include the first binder alone as a binder.

In some embodiments, the negative electrode active material layer may include a mixture of the first binder and the second binder as a binder.

The second binder may be a non-aqueous binder, an aqueous binder, a dry binder, or a combination thereof.

The non-aqueous binder may be polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the negative electrode binder, a cellulose-based compound capable of imparting viscosity may be further included. The cellulose-based compound may be a mixture of two of more of carboxymethylcellulose, hydroxypropyl methylcellulose, methylcellulose, or an alkali metal salt thereof. The alkali metal may be Na, K, or Li.

The dry binder may be a fibrous polymeric material and may be, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any suitable electrically conductive material that does not cause chemical change in cells under construction. For example, the conductive material may include one or more carbon materials, such as natural graphite, artificial graphite, carbon black, acetylene black, Ketjen black, carbon fibers, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; or mixtures thereof. The negative electrode current collector may be selected from copper foil, nickel foil, stainless steel foil, titanium foil, nickel foam, copper foam, a conductive metal-coated polymer base, and combinations thereof.

### Rechargeable lithium battery

A rechargeable lithium battery includes the negative electrode and a positive electrode. The rechargeable lithium battery may further include an electrolyte. The rechargeable lithium battery may further include a separator.

### Positive electrode

The positive electrode may include a current collector and a positive electrode active material layer formed on the current collector. The positive electrode active material layer may include a positive electrode active material and may further include a binder and/or a conductive material.

In some embodiments, the positive electrode may further include an additive capable of acting as a sacrificial positive electrode.

The positive electrode material may be present in an amount of 90 wt% to 99.5 wt% based on 100 wt% of the positive electrode active material layer and each of the binder and the conductive material may be present in an amount of 0.5 wt% to 5 wt% based on 100 wt% of the positive electrode material layer.

### Positive electrode active material

As a positive electrode active material, a compound allowing (e.g., capable of) reversible intercalation and deintercalation of lithium (lithiated intercalation compound) may be used. For example, the positive electrode active material may be at least one complex oxide (e.g., composite oxide) of lithium with a metal selected from among cobalt, manganese, nickel and combinations thereof.

The composite oxide may be a lithium transition metal composite oxide. For example, the composite oxide may be a lithium nickel oxide, a lithium cobalt oxide, a lithium manganese oxide, a lithium iron phosphate compound, a cobalt-free lithium manganese oxide, or a combination thereof.

By way of example, the composite oxide may be a compound represented by any one of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001 ≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A is Ni, Co, Mn, or a combination thereof; X denotes Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In some embodiments, the positive electrode active material may be a high nickel-content positive electrode material containing 80 mol% or more, 85 mol% or more, 90 mol% or more, 91 mol% or more, or 94 mol% to 99 mol% of nickel based on 100 mol% of metals excluding lithium in the lithium transition metal composite oxide. The high nickel-content positive electrode active material can realize high capacity and thus can be applied to high capacity/high density rechargeable lithium batteries.

The binder serves to attach positive electrode active material particles to each other while also attaching the positive electrode material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and/or the like, without being limited thereto.

The conductive material serves to impart conductivity to the electrodes and may be any suitable electrically conductive material that does not cause chemical change in cells under construction. The conductive material may include, for example, one or more carbon materials, such as natural graphite, artificial graphite, carbon black, acetylene black, Ketjen black, carbon fiber, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; and mixtures thereof.

The current collector may be Al and/or the like, without being limited thereto.

### Electrolyte

The electrolyte includes a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvents may include methyl acetate, ethyl acetate, n-propyl acetate, dimethyl acetate, methyl propionate, ethyl propionate, decanolide, mevalonolactone, valerolactone, caprolactone, and/or the like.

The ether-based solvents may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone and/or the like. The alcohol-based solvents may include ethyl alcohol, isopropyl alcohol, and/or the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and/or the like; sulfolanes; and/or the like.

The non-aqueous organic solvent may be used alone or as a mixture thereof.

In using the carbonate-based solvent, a mixture of a cyclic carbonate and a chain carbonate may be used, and the cyclic carbonate and the chain carbonate may be mixed in a volume ratio of 1:1 to 1:9.

The lithium salt is a substance that is soluble in an organic solvent and serves as a source of lithium ions in a battery, enabling a basic operation of a rechargeable lithium battery while facilitating transfer (e.g., movement) of the lithium ions between the positive electrode and the negative electrode. The lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFBOP), and lithium bis(oxalato)borate (LiBOB).

### Separator

Depending on the type of rechargeable lithium battery, the separator may be interposed between the positive electrode and the negative electrode. For such a separator, polyethylene, polypropylene, polyvinylidene fluoride, or at least two layers thereof may be used as well as mixed layers, such as a polyethylene/polypropylene bilayer separator, a polyethylene/polypropylene/polyethylene tri-layer separator, a polyethylene/polyethylene/polypropylene tri-layer separator, and/or the like.

The separator may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene, polypropylene, and/or the like, polyesters, such as polyethylene terephthalate, polybutylene terephthalate, and/or the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, and polytetrafluoroethylene (e.g., TEFLON), copolymers thereof, or mixtures thereof.

The organic material may include a polyvinylidene fluoride polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

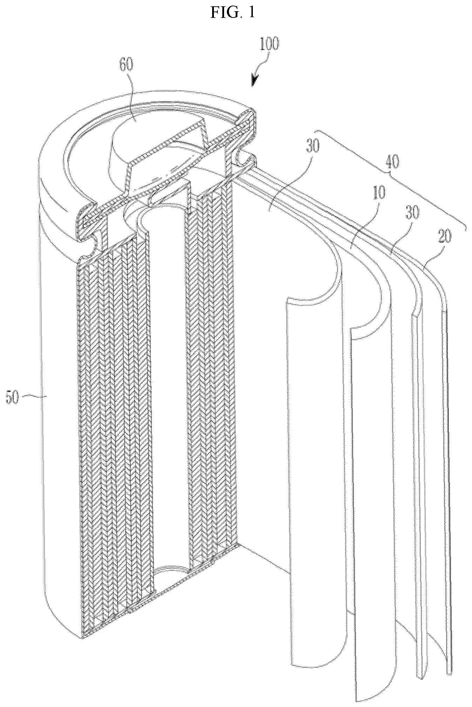

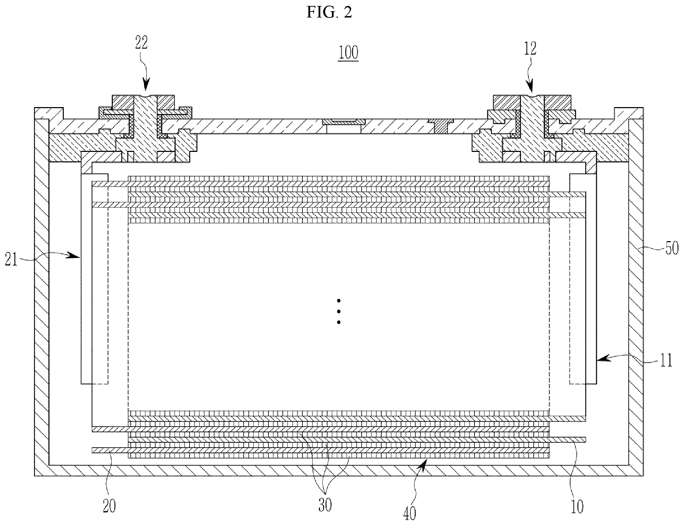

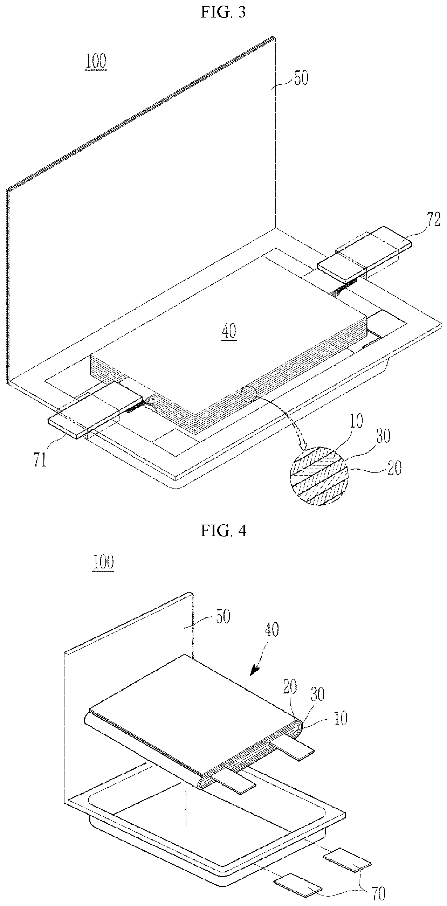

Rechargeable lithium batteries may be classified into a cylindrical battery, a prismatic battery, a pouch type or kind battery, a coin type or kind battery, and/or the like based on the shapes thereof. FIG. 1 to FIG. 4 are schematic views of rechargeable lithium batteries according to embodiments of the present disclosure, in which FIG. 1 shows a cylindrical battery, FIG. 2 shows a prismatic battery, and FIG. 3 and FIG. 4 show pouch type batteries. Referring to FIG. 1 to FIG. 4, a rechargeable lithium battery 100 may include an electrode assembly 40 in which a separator 30 is interposed between a positive electrode 10 and a negative electrode 20, and a case 50 that receives the electrode assembly 40 therein. The positive electrode 10, the negative electrode 20, and the separator 30 may be embedded in an electrolyte. The rechargeable lithium battery 100 may include a sealing member 60 that seals the case 50, as shown in FIG. 1. In addition, as shown in FIG. 2, the rechargeable lithium battery 100 may include a positive electrode lead tab 11, a positive electrode terminal 12, a negative electrode lead tab 21, and a negative electrode terminal 22. Referring to FIG. 3 and FIG. 4, the rechargeable lithium battery 100 may include electrode tabs 70, that is, a positive electrode tab 71 and a negative electrode tab 72, which act as electrical pathways conducting current generated in the electrode assembly 40 to the outside.

Rechargeable lithium batteries according to embodiments of the present disclosure may be applied to automobiles, mobile phones, and/or various other electrical devices, without being limited thereto.

Next, the present disclosure will be described in more detail with reference to examples. However, it should be understood that these examples are provided for illustration only and should not be construed in any way as limiting the disclosure.

### Example 1

A mixture was prepared by mixing 55 wt% of acrylic acid (AA), 40 wt% of acrylonitrile (AN), and 5 wt% of 3-allyloxy-2-hydroxy-1-propanesulfonic acid (AHPS) based on 100 wt% of the mixture, and a potassium persulfate initiator and water were added to the mixture. The initiator was used in an amount of 0.5 parts by weight relative to 100 parts by weight of the mixture.

Then, an aqueous binder solution containing a copolymer (weight average molecular weight: 910,000 g/mol) having a unit derived from AA, a unit derived from AN, and a unit derived from AHPS was prepared through solution polymerization of the prepared mixture.

A negative electrode active material slurry was prepared by mixing the binder solution, a styrene butadiene rubber, a conductive material, and a negative electrode active material in water as a solvent. The negative electrode active material slurry contained 1.5 wt% of the aqueous binder, 2.0 wt% of the styrene butadiene rubber, 0.5 wt% of carbon nanotubes as a conductive material, and 96 wt% of the negative electrode active material in terms of solid content excluding water. As the negative electrode active material, a mixture of artificial/natural graphite and a silicon-carbon composite active material (mixing ratio: 90:10 by weight) was used. The silicon-carbon composite was prepared in the form of a secondary particle aggregate prepared through aggregation of artificial graphite and silicon nanoparticles and including a soft carbon coating layer formed on the surface of the aggregate. Further, the silicon-carbon composite was composed of 40 wt% of the artificial graphite, 40 wt% of the silicon nanoparticles, and 20 wt% of the soft carbon.

A negative electrode was prepared by applying the negative electrode active material slurry to copper foil as a current collector, followed by drying and rolling.

A full cell battery was prepared using the prepared negative electrode, a positive electrode and an electrolyte in a suitable (e.g., typical) manner. The electrolyte was a solution of 1.5 M LiPF₆ dissolved in a mixture of ethylene carbonate, ethyl methyl carbonate and dimethyl carbonate (volume ratio, 30:50:20). The positive electrode was formed by mixing 96 wt% of LiCoO₂, 2 wt% of Ketjen black, and 2 wt% of polyvinylidene fluoride in a solvent (N-methyl pyrrolidone) to prepare a positive electrode active material slurry, and applying the positive electrode active material slurry to an aluminium collector, followed by drying and rolling.

### Example 2

A binder solution containing a copolymer (weight average molecular weight: 910,000 g/mol) was prepared in the same manner as in Example 1 except that a mixture of 55 wt% of acrylic acid (AA), 40 wt% of acrylonitrile (AN), and 5 wt% of 3-sulfopropyl acrylate (SPA) based on 100 wt% of the mixture was prepared. A negative electrode and a battery were prepared in the same manner as in Example 1 except that the prepared binder solution was used.

### Example 3

A binder solution containing a copolymer (weight average molecular weight: 870,000 g/mol) was prepared in the same manner as in Example 1 except that a mixture of 55 wt% of acrylic acid (AA), 40 wt% of acrylonitrile (AN), and 5 wt% of [2-(methacryloyloxy)ethyl]dimethyl-(3-sulfopropyl)ammonium hydroxide (MSAH) were mixed based on 100 wt% of the mixture was prepared. A negative electrode and a battery were prepared in the same manner as in Example 1 except that the prepared binder solution was used.

### Example 4

A binder solution containing a copolymer (weight average molecular weight: 870,000 g/mol) was prepared in the same manner as in Example 1 except that a mixture of 55 wt% of acrylic acid (AA), 40 wt% of acrylonitrile (AN), 2.5 wt% of 3-allyloxy-2-hydroxy-1-propanesulfonic acid (AHPS), and 2.5 wt% of (2-acrylamido-2-methyl-1-propanesulfonic acid (AMPS) based on 100 wt% of the mixture was prepared. A negative electrode and a battery were prepared in the same manner as in Example 1 except that the prepared binder solution was used.

### Example 5

A binder solution containing a copolymer was prepared in the same manner as in Example 1 except that a mixture of 50 wt% of acrylic acid (AA), 40 wt% of acrylonitrile (AN), and 10 wt% of 3-allyloxy-2-hydroxy-1-propanesulfonic acid (AHPS) based on 100 wt% of the mixture was used. A negative electrode and a battery were prepared in the same manner as in Example 1 except that the prepared binder solution was used.

### Example 6

A binder solution containing a copolymer was prepared in the same manner as in Example 1 except that a mixture of 56 wt% of acrylic acid (AA), 40 wt% acrylonitrile (AN), and 4 wt% of 3-allyloxy-2-hydroxy-1-propanesulfonic acid (AHPS) based on 100 wt% of the mixture was used. A negative electrode and a battery were prepared in the same manner as in Example 1 except that the prepared binder solution was used.

### Example 7

A binder solution containing a copolymer was prepared in the same manner as in Example 1 except that a mixture of 49 wt% of acrylic acid (AA), 40 wt% acrylonitrile (AN), and 11 wt% of 3-allyloxy-2-hydroxy-1-propanesulfonic acid (AHPS) based on 100 wt% of the mixture was used. A negative electrode and a battery were prepared in the same manner as in Example 1 except that the prepared binder solution was used.

### Comparative Example 1

A binder solution containing a copolymer (weight average molecular weight: 900,000 g/mol) was prepared in the same manner as in Example 1 except that a mixture of 60 wt% of acrylic acid (AA) and 40 wt% of acrylonitrile (AN) based on 100 wt% of the mixture was used. A negative electrode and a battery were prepared in the same manner as in Example 1 except that the prepared binder solution was used.

### Comparative Example 2

A binder solution containing a copolymer (weight average molecular weight: 890,000 g/mol) was prepared in the same manner as in Example 1 except that a mixture of 55 wt% of acrylic acid (AA), 40 wt% of acrylonitrile (AN), and 5 wt% of vinylsulfonic acid (VS) based on 100 wt% of the mixture was used. A negative electrode and a battery were prepared in the same manner as in Example 1 except that the prepared binder solution was used.

### Comparative Example 3

A binder solution containing a copolymer (weight average molecular weight: 880,000 g/mol) was prepared in the same manner as in Example 1 except that a mixture of 55 wt% of acrylic acid (AA) and 40 wt% of acrylonitrile (AN), and 5 wt% of styrene (St) based on 100 wt% of the mixture was used. A negative electrode and a battery were prepared in the same manner as in Example 1 except that the prepared binder solution was used.

### Experimental Example 1: Crack generation

Cracks generated during the process of applying the negative electrode slurries prepared in Examples and Comparative Examples were observed with the naked eye. Specifically, a negative electrode surface was visually inspected to evaluate generation of cracks.

### Experimental Example 2: Warpage value (unit: cm)

Each of the negative electrodes prepared in Examples and Comparative Examples was cut into a sample having a size of 5 cm x 5 cm (length x width), which in turn was placed on a flat floor in a dry room for 1 hour to measure the height of the negative electrode at the highest point from the bottom of the floor.

### Experimental Example 3: Negative electrode expansion rate at full charge (unit: %)

The cells of Examples and Comparative Examples were subjected to constant current charging at 0.2 C at 25°C until the voltage reached 4.2 V, and cut-off at 0.025 C in a constant voltage mode. A ratio of a thickness of the negative electrode thickness before the test to a thickness of the negative electrode after the test was obtained and the result was expressed as a negative electrode expansion rate.

### Experimental Example 4: Full cell SOH90 (unit: cycles)

A stack full cell was fabricated by stacking 10 sheets of the positive electrode and negative electrode cells fabricated in each of Examples and Comparative Examples, followed by evaluation of the number of cycles at which the cell reached a capacity retention rate of 90% by charging at 0.33 C and discharging at 0.5 C at 25°C.

**Table 1**

| | Presence of anionic functional group | Carbon number | Kind of first monomer (Content) | Cracking | Negative electrode warpage value | Expansion rate | SoH90 |
|---|---|---|---|---|---|---|---|
| Example 1 | Present | 3 | AHPS (5 wt%) | Free | 0.9 | 30.5 | 500 |
| Example 2 | Present | 3 | SPA (5 wt%) | Free | 0.9 | 30.4 | 510 |
| Example 3 | Present | 5 | MSAH (5 wt%) | Free | 1.2 | 31 | 510 |
| Example 4 | Present | 3, 3 | AHPS (2.5 wt%) + AMPS (2.5 wt%) | Free | 1.1 | 30 | 525 |
| Example 5 | Present | 3 | AHPS (10 wt%) | Free | 1.0 | 30 | 500 |
| Example 6 | Present | 3 | AHPS (4 wt%) | Slight | 1.3 | 30 | 500 |
| Example 7 | Present | 3 | AHPS (11 wt%) | Free | 1.0 | 31.5 | 500 |
| Comparative Example 1 | Absent | 0 | - | Many | 5 | 30 | 10 |
| Comparative Example 2 | Present | 0 | - | Many | 5.1 | 32 | 10 |
| Comparative Example 3 | Absent | 0 | - | Many | 4.9 | 31 | 10 |

As shown in Table 1, the aqueous binders according to embodiments of the present disclosure reduced shrinkage and expansion of the silicon-based negative electrode active material, prevented or substantially prevented negative electrode embrittlement, improved negative electrode energy density, made the negative electrodes each containing the silicon-based negative electrode active material crack-free, and reduced the warpage value of the negative electrodes.

Although the present disclosure has been described with reference to some embodiments and drawings, it should be understood that the present disclosure is not limited thereto and various modifications, changes, alterations, and equivalent embodiments can be made by those skilled in the art without departing from the scope of the present disclosure.

## Claims

1. A binder for a negative electrode of rechargeable lithium batteries, comprising:
a unit derived from a first monomer; and
a unit derived from a second monomer, the second monomer being a (meth)acrylic monomer,
wherein the first monomer comprises at least one of a (meth)allyl ether monomer or a (meth)acryl ester monomer, and
each of the (meth)allyl ether monomer and the (meth)acryl ester monomer comprises an alkyl group having a carbon number of 3 or more and an anionic functional group.

2. The binder as claimed in claim 1, wherein the anionic functional group is a sulfonic acid group (-SO₃H) or an anion (-SO₃⁻) of the sulfonic acid group, a phosphonic acid group (-PO(OH)₂) or an anion (-PO(OH)O⁻) or (-PO₃²⁻) of the phosphonic acid group, or a phosphinic acid group (-P(O)H(OH)) or an anion (-P(O)HO⁻) of the phosphinic acid group.

3. The binder as claimed in claim 1 or claim 2, wherein the carbon number is 3 to 20.

4. The binder as claimed in any one of claims 1 to 3, wherein the first monomer is represented by Formula 1: 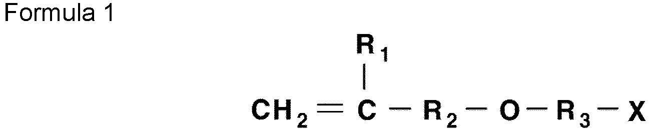
where R₁ is hydrogen or a methyl group;
R₂ is CH₂ or (C=O);
R₃ is a substituted or unsubstituted alkylene group having a carbon number of 3 or more, a substituted or unsubstituted aminoalkylene group having a carbon number of 3 or more or an ammonium cationic group thereof, or a substituted or unsubstituted alkylamino group having a carbon number of 3 or more or an ammonium cationic group thereof; and
X is an anionic functional group.

5. The binder as claimed in any one of claims 1 to 4, wherein the first monomer comprises at least one compound selected from among compounds represented by Formula 1-1, Formula 1-2, and Formula 1-3:

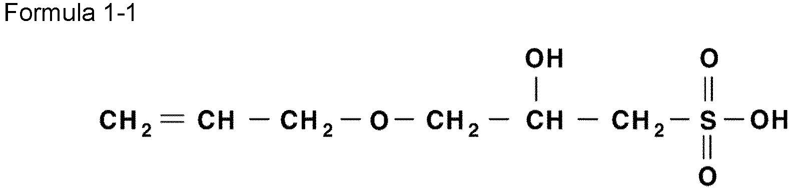

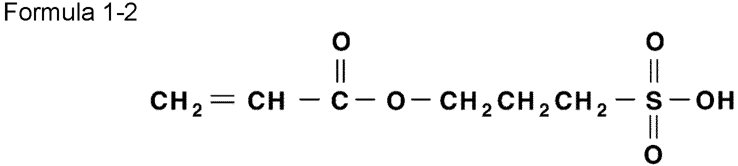

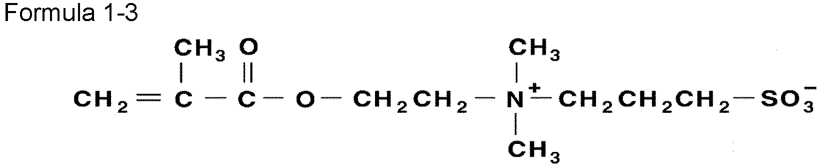

6. The binder as claimed in any one of claims 1 to 5, wherein the (meth)acrylic monomer comprises at least one of a (meth)acrylic monomer having a nitrile group or a (meth)acrylic monomer having a carboxylic acid group, optionally wherein the (meth)acrylic monomer comprises a mixture of the (meth)acrylic monomer having a nitrile group and the (meth)acrylic monomer having a carboxylic acid group.

7. The binder as claimed in any one of claims 1 to 6, wherein the binder is a copolymer of a monomer mixture comprising the first monomer and the second monomer.

8. The binder as claimed in claim 7, wherein the monomer mixture comprises 3 wt% to 15 wt% of the first monomer and 85 wt% to 97 wt% of the second monomer.

9. The binder as claimed in claim 7, wherein the monomer mixture comprises 3 wt% to 15 wt% of the first monomer, 30 wt% to 50 wt% of a (meth)acrylic monomer having a nitrile group, and 40 wt% to 65 wt% of a (meth)acrylic monomer having a carboxylic acid group.

10. The binder as claimed in any one of claims 7 to 9, wherein the first monomer and the second monomer are present in a total amount of 99.5 wt% or more in the monomer mixture.

11. The binder as claimed in any one of claims 1 to 10, further comprising:
a unit derived from a (meth)acrylamide monomer having an anionic functional group, optionally wherein the anionic functional group of the (meth)acrylamide monomer is a sulfonic acid group (-SO₃H) or an anion (-SO₃⁻) of the sulfonic acid group, a phosphonic acid group (-PO(OH)₂) or an anion (-PO(OH)O⁻) or (-PO₃²⁻) of the phosphonic acid group, or a phosphinic acid group (-P(O)H(OH)) or an anion (-P(O)HO⁻) of the phosphinic acid group.

12. The binder as claimed in claim 11, wherein the (meth)acrylamide monomer is represented by Formula 4: 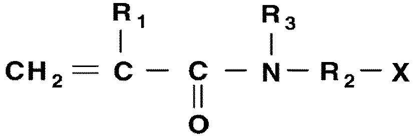
where R₁ is hydrogen or a methyl group;
R₂ is a substituted or unsubstituted alkylene group having a carbon number of 1 or more;
R₃ is hydrogen or a substituted or unsubstituted C₁ to C₁₀ alkyl group; and
X is an anionic functional group.

13. The binder as claimed in claim 11 or claim 12, wherein
the binder is a copolymer of a monomer mixture comprising the first monomer, the second monomer, and the (meth)acrylamide monomer, and
the (meth)acrylamide monomer is present in an amount of 1 wt% to 5 wt% in the monomer mixture.

14. The binder as claimed in any one of claims 1 to 13, wherein the binder has a weight average molecular weight of 500,000 g/mol to 1,500,000 g/mol.

15. A rechargeable lithium battery comprising:
a negative electrode comprising the binder as claimed in any one of claims 1 to 14 and a negative electrode active material;
a positive electrode; and
an electrolyte, optionally wherein the negative electrode active material comprises a silicon-based negative electrode active material.
